# EUROPÄISCHE PATENTANMELDUNG

(11) **EP 0 523 558 A1**
(43) Veröffentlichungstag der Anmeldung: **20.01.1993**
(21) Anmeldenummer: 92111744.6
(22) Anmeldetag: 10.07.1992
(51) Int. Cl.: G02F 1/137, G09G 3/36

(54) **Verfahren zur Ansteuerung einer ferroelektrischen Flüssigkristallanzeige**

(30) Priorität: 17.07.1991 DE 4123696
(71) Anmelder: MERCK PATENT GmbH, D-64271 Darmstadt (DE)
(72) Erfinder: Pausch, Axel, W-6104 Seeheim 1 (DE); Geelhaar, Thomas, Dr., W-6500 Mainz (DE)

(57) **Zusammenfassung**

Die Anmeldung betrifft ein Verfahren zur Ansteuerung einer ferroelektrischen Flüssigkristallanzeige mit einem oder mehreren Bildpunkten, von denen jeder ein Paar von einander gegenüberliegenden Elektroden und einen zwischen den Elektroden angeordneten ferroelektrischen Flüssigkristall aufweist, der seinen Molekülausrichtungszustand in einen anderen Zustand ändert, wenn ein Schreibimpuls an die gegenüberliegenden Elektroden angelegt wird, der gleich oder größer als ein Schwellenimpuls V x t ist, worin V die zwischen den Elektroden liegende Spannung und t die Impulsdauer bedeuten und wobei der neue Zustand nach dem Ausschalten des Schreibimpulses bis zum Eintreffen eines weiteren Schaltimpulses erhalten bleibt, dadurch gekennzeichnet, daß durch die Schreibimpulse neben den durch die beiden Tiltwinkel +ϑ und -ϑ gekennzeichneten voll durchgeschalteten Zuständen auch ein oder mehrere stabile Zwischenzustände erzeugt worden können, wobei der Vt-Wert des Schreibimpulses zur Erzeugung eines benachbarten Zwischenzustandes nicht mehr als etwa 1/5 des Vt-Wertes des Schreibimpulses beträgt, der zum Umschalten zwischen den beiden klassischen Zuständen erforderlich ist.

Das erfindungsgemäβe Ansteuerungsverfahren erlaubt eine einfache und sehr effektive Darstellung von Graustufen.

## Beschreibung

Die Erfindung betrifft ein Verfahren zur Ansteuerung einer ferroelektrlschen Flüssigkristallanzeige gemäß dem Oberbegriff von Anspruch 1.

Derartige Anzeigen enthalten in der Regel chirale getiltete smektische Phasen, welche ferroelektrische Eigenschaften aufweisen (R.B. Meyer et al., J. Physique (Lett.), 36 (1975) L-69). Dabei sind vielfach chirale getiltete smektische C-Phasen (Sc*) bevorzugt, die durch Dotierung einer Sc-Basismischung mit einem chiralen Dotierstoff erhalten werden können (W. Kuczynski et al., Chem. Phys. Lett., 70 (1983) 123).

Ferroelektrische Flüssigkristallanzeigen beruhen in der Regel auf dem von Clark und Lagerwall beschriebenen Prinzip der SSFLC-Technologie (N.A. Clark und S.T. Lagerwall, Appl. Phys. Lett., 36 (1980) 899). Während chiral getiltete smektische Flüssigkristalle im bulk durch eine helixartige Anordnung der Moleküldirektoren gekennzeichnet sind, wodurch eine Gesamtpolarisation von Null resultiert, befindet sich der Flüssigkristall bei diesen Systemen zwischen Substratplatten, die mit Elektrodenschichten und darüber befindlichen Orientierungsschichten versehen sind. Dadurch ist die freie Rotation der Moleküldirektoren an den Substratplatten aufgehoben, und die Moleküle befinden sich dort in der Ebene der Substratplatten, wobei wegen des molekularen Tilts von ϑ zwei ausgezeichnete Orientierungen mit +ϑ und -ϑ resultieren. Da der Abstand der Substratplatten sehr klein ist und i.a. weniger als 3 µm beträgt, setzt sich die durch die Substratplatten induzierte Orientierung der Flüssigkristallmoleküle in der Flüssigkristallschicht fort und es ergibt sich die sogenannte "bookshelf geometry". Die von den Flüssigkristallmolekülen gebildeten Schichten sind senkrecht zu den Substratplatten angeordnet und "lehnen" sich dabei unter dem Winkel +ϑ oder -ϑ gegen die Zellumrandung "an". Durch diese Anordnung resultiert eine makroskopische Polarisation, wobei der Polarisationsvektor senkrecht zu den Substratplatten orientiert ist. Durch Anlegen eines entsprechenden Gleichspannungsimpulses kann der Flüssigkristall von einem Zustand in den anderen geschaltet werden, wobei der jeweils erreichte Zustand nach Abschalten des Impulses erhalten bleibt: das System ist bistabil.

Es hat sich gezeigt, daß die Schaltschwelle nicht wie bei der TN-Zelle durch eine Schwellenspannung, sondern besser durch einen Schwellenspannungsimpuls V x t gekennzeichnet wird (S. Matsumoto et al., SID 88 Digest, 41, 1988). Die Größe des Schwellenimpulses wird dabei von dem jeweils verwendeten Flüssigkristall und von Zellparametern beeinflußt (vgl. die in S.T. Lagerwall et al., Ferroelectrics, 94 (1989) 3, gegebene physikalische Interpretation des Schwellenimpulses). Für das von S. Matsumoto (loc. cit.) untersuchte Flüssigkristallmaterial 025 (Toshiba) kann z.B. ein Schwellenimpuls von etwa 10⁻³ Vs angegeben werden.

Die Elektrodenschichten sind üblicherweise in Matrixform ausgeführt. Auf der einen Elektrode befinden sich in Zeilen angeordnete Scanning- oder Strobeelektroden und auf der anderen Elektrode in Spalten angeordnete Dataelektroden. An den durch die Kreuzungsstellen definierten Bildpunkten kann der Flüssigkristall durch Spannungsimpulse entsprechender Polarität in den einen oder anderen der beiden stabilen Zustände geschaltet werden.

In der Literatur sind verschiedene Ansteuerungsverfahren beschrieben worden. Das zuerst entwickelte, relativ einfache Schema auf der Basis bipolarer Impulse (T. Harada et al., SID 85 Digest, 1985, 131) ist von komplexeren Ansteuerungsverfahren verdrängt worden (s. z.B. S. Shimoda et al., Proceedings of SID, 28/2, 1987 oder S. Matsumoto et al., Ferroelectrics, 85 (1986) 207). Von T. Umeda et al. wurde in Japanese Journal of Appl. Phys., 27 (1988) 1115, ein AC-Feld stabili siertes Matrixansteuerschema vorgeschlagen. Neben der An-Steuerung durch eine passive Matrix ist auch die Ansteuerung durch eine aktive Matrix (z.B. TFT- oder MIM-Matrix) möglich.

Die ferroelektrische Flüssigkristallanzeige befindet sich zwischen Polarisatoren, die üblicherweise so angeordnet sind, daß einer der beiden stabilen Schaltzustände lichtundurchlässig und der andere lichtdurchlässig ist. Dies bedeutet, daß derartige Flüssigkristallanzeigen nur zwischen hell und dunkel geschaltet werden können, und daß der elementare Schaltvorgang -anders als etwa bei der TN-Zelle- keine Darstellung von Grautönen erlaubt.

Zur Behebung dieses schwerwiegenden Nachteils sind verschiedene Lösungskonzepte ausgearbeitet worden. So ist etwa vorgeschlagen worden, jeden Bildpunkt in einen Array von Unterbildpunkten zu unterteilen, sodaß der Bildpunkt je nach Zahl der eingeschalteten Unterbildpunkte mehr oder weniger hell erscheint. Man spricht dabei von spatial dither, wenn die Unterbildpunkte seperat angesteuert werden und von temporal dither, wenn die Unterbildpunkte in aufeinanderfolgenden Scanzyklen (subframes) nacheinander angesteuert werden. Nachteilig ist allerdings, daß sich beim spatial dither die Zahl der erforderlichen Zuleitungen stark erhöht, während beim temporal dither die frame time sehr groß wird. Von W.J.A.M. Hartmann wurde vorgeschlagen (JOERS/Alvey presentation at the 1988 (San Diego) International Display Research Conference, 181), in den einzelnen Bildpunkten durch einen sehr sorgfältigen Reibeprozeß eine Multidomänenstruktur zu erzeugen, wobei durch Variation der an einem Pixel anliegenden Spannung ein größerer oder kleinerer Teil der Domänen eingeschaltet werden kann. Dieses Verfahren ist allerdings recht aufwendig und erfordert die Verwendung einer aktiven Matrix.

Die bisher vorgeschlagenen Lösungen zur Erzeugung von Graustufen bei ferroelektrischen Flüssigkristalldisplays werden nicht allen technischen Anforderungen gerecht, was sich trotz der sonstigen großen Vorteile ferroelektrischer Flüssigkristallanzeigen (z.B. sehr schnelle Schaltzeiten, sehr gute Blickwinkelabhängigkeit des Kontrastes) negativ auf die Kommerzialisierung dieses Displaytyps ausgewirkt hat.

Die Aufgabe der vorliegenden Erfindung bestand in der Bereitstellung eines Ansteuerungsverfahrens für ferroelektrische Flüssigkristallanzeigen, welche die Darstellung von Graustufen besser als bisherige Verfahren ermöglicht.

Es wurde gefunden, daß diese Aufgabe durch die Bereitstellung des erfindungsgemäßen Ansteuerungsverfahrens gelöst wird.

Gegenstand der Erfindung ist somit ein Verfahren zur Ansteuerung einer ferroelektrischen Flüssigkristallanzeige mit einem oder mehreren Bildpunkten, von denen jeder ein Paar von einander gegenüberliegenden Elektroden und einen zwischen den Elektroden angeordneten ferroelektrischen Flüssigkristall aufweist, der seinen Molekülausrichtungszustand in einen anderen Zustand ändert, wenn ein Schreibimpuls an die gegenüberliegenden Elektroden angelegt wird, der gleich oder grösser als ein Schwellenimpuls V x t ist, worin V die zwischen den Elektroden liegende Spannung und t die Impulsdauer bedeuten und wobei der neue Zustand nach dem Ausschalten des Schreibimpulses bis zum Eintreffen eines weiteren Schaltimpulses erhalten bleibt, dadurch gekennzeichnet, daß durch die Schreibimpulse neben den durch die beiden Tiltwinkel +ϑ und - ϑ gekennzeichneten voll durchgeschalteten Zuständen auch ein oder mehrere stabile Zwischenzustände erzeugt werden können, wobei der Vt-Wert des Schreibimpulses zur Erzeugung eines benachbarten Zwischenzustandes nicht mehr als etwa 1/5 des Vt-Wertes des Schreibimpulses beträgt, der zum Umschalten zwischen den beiden voll durchgeschalteten Zuständen erforderlich ist.

Die erfindungsgemäßen ferroelektrischen Flüssigkristallzellen enthalten eine elektrisch ansteuerbare, ferroelektrische Flüssigkristallschicht, die sich zwischen 2 Substraten oder Trägerplatten befindet, welche mit einer Umrandung eine Zelle bilden. Die Substrate, von denen zumindest eines transparent sein muß, bestehen häufig aus Glas oder tranparentem Kunststoff; es kommen aber auch andere Materialien in Betracht.

Auf den Innenseiten der Substrate befinden sich Elektroden, die üblicherweise eine Matrix von Bildpunkten bilden und z.B. aus Indium-Zinnoxid (ITO) oder Indiumoxid bestehen können. Nähere Einzelheiten können z.B. E. Kaneko, Liquid Crystal TV Displays: Principles and Applications of Liquid Crystal Displays, Tokyo, 1987 entnommen werden.

Auf den Elektrodenschichten befinden sich Orientierungsschichten, welche direkt mit dem ferroelektrischen Flüssigkristall in Kontakt stehen und eine planare Ausrichtung des Flüssigkristallmoleküle bewirken. Geeignete Materialien zur Beschichtung von Glassubstraten werden z.B. in Ferroelectrics, 59 (1984) 137 beschrieben.

Die Anordnung befindet sich üblicherweise zwischen gekreuzten Linearpolarisatoren; entspricht die Orientierung der Flüssigkristallmoleküle in einem der beiden oben beschriebenen Zustände der Richtung eines Linearpolarisators, so erscheint dieser Zustand dunkel, während der andere Zustand hell erscheint. Es sind aber auch andere Orientierungen der Polarisatoren möglich.

Als Flüssigkristalle werden in den erfindungsgemäßen ferroelektrischen Flüssigkristallanzeigen überwiegend chiral getiltete smektische Phasen verwendet, die ferroelektrische Eigenschaften aufweisen. Von den flüssigkristallinen getilteten chiralen smektischen Phasen sind die S_{C}* und die S_{H}^{*} und insbesondere die S_{C}* ganz besonders geeignet. Zur Erzeugung der chiralen Struktur können eine oder mehrerer Komponenten des Flüssigkristalls, der i.a. aus einer Mischung von mindestens zwei und insbesondere mehr als 5 Einzelkomponenten besteht, ein chirales Zentrum aufweisen, und/oder dem achiralen Basismedium können ein oder mehrere chirale Dotierstoffe zugesetzt werden. Die Dotierstoffe können mesogen oder auch nicht-mesogen sein, weisen aber dann vorzugsweise eine Flüssigkristallmolekülen ähnliche Struktur auf. Die Verwendung chiraler Dotierstoffe mit hoher Spontanpolarisation ist bevorzugt, da auf diese Weise die Spontanpolareisation praktisch unabhängig von anderen Eigenschaften des Flüssigkristall, wie z.B. dem Phasenbereich, der Viskosität usw. beeinflußt werden kann. Da die Schaltzeit von ferroelektrischen Flüssigkristallanzeigen der Spontanpolarisation umgekehrt proportional ist, sind Flüssigkristalle mit hoher Spontanpolarisation bevorzugt und die chiralen Dotierstoffe weisen für die Spontanpolarisation insbesondere Werte von mehr als 5 nC/cm² und insbesondere von mehr als 7,5 nC/cm² auf; es können allerdings auch Dotierstoffe mit kleinerer Spontanpolarisation verwendet werden. Geeignete Basismaterialien sind z.B. beschrieben in DE 35 15 374, DE 35 18 734, DE 36 04 462, DE 35 33 333, DE 36 14 778, DE 37 30 713, DE 37 33 818, DE 39 16 508, DE 39 16 509, DE 39 19 104, DE 39 22 790, DE 3928264, DE 39 31 707, DE 39 41 761, DE 40 02 411, DE 40 06 743, DE 40 19 595, DE 40 23 867, DE 40 26 223, DE 40 30 603 und DE 41 18 279, während in DE 35 15 373, DE 38 43 128, DE 39 15 378, DE 39 15 698, DE 39 20 571, DE 39 22 416, DE 39 23 324, DE 39 22 308, DE 39 22 307, DE 39 39 982, DE 39 23 324 und DE 40 34 122 Dotierstoffe angegeben sind. Diese Angaben sind jedoch beispielhaft zu verstehen und sollen die Erfindung lediglich erläutern und nicht beschränken; das erfindungsgemäße Ansteuerverfahren kann ganz allgemein verwendet werden und ist nicht auf spezielle ferroelektrische Flüssigkristalle oder Dotierstoffe beschränkt.

Zur Schaltung der ferroelektrischen Flüssigkristallanzeigen werden an die Zellen- und Spaltenelektroden geeignete Spannungs-Zeit-Verläufe angelegt. Aus der Zeilenspannung, die auch als Scan-, Strobe- oder Selectsignal bezeichnet wird, und dem Spaltensignal, das auch als Datasignal bezeichnet wird, setzt sich die an dem jeweiligen Bildpunkt anliegende Spannung zusammen, wie dies z.B. in S.T. Lagerwall et al., Ferroelectrics, 94 (1989) 1205 beschrieben ist.

Es wurde nun überraschenderweise gefunden, daß der ferroelektrische Flüssigkristall bereits geschaltet werden kann, wenn an den Elektroden Schreibimpulse anliegen, deren Vt-Wert nicht mehr als etwa 1/5 des Vt-Wertes des Schreibimpulses beträgt, der zum Umschalten zwischen den beiden voll durchgeschalteten, durch +ϑ und -ϑ gekennzeichneten Zuständen, die oben näher beschrieben sind, erforderlich ist.

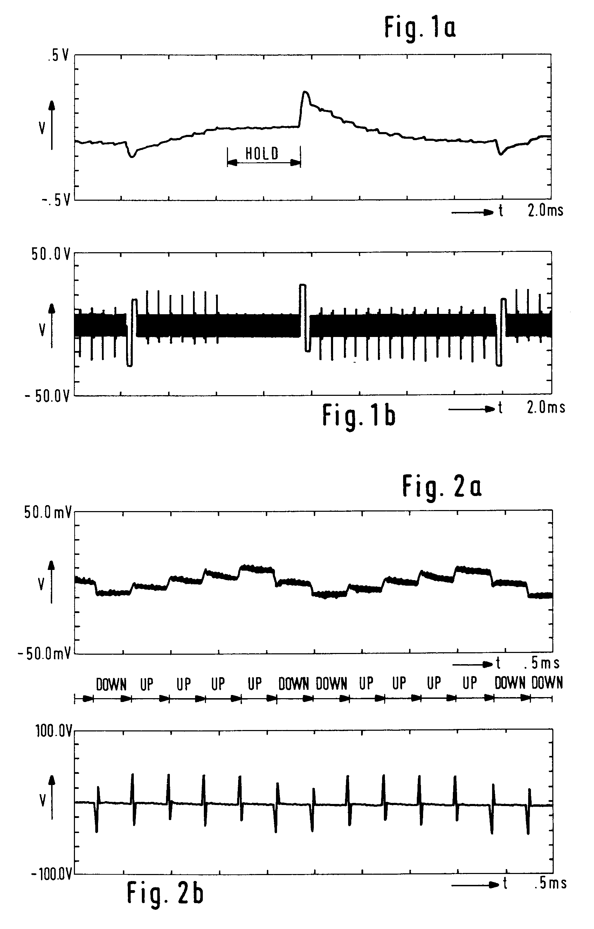

Die in den nachfolgend beschriebenen Fig. 1 und 2 gezeigten Beispiele für erfindungsgemäße Ansteuerungsverfahren sollen die Erfindung lediglich erläutern und keinesfalls begrenzen.

In Fig. 1 ist ein erfindungsgemäßes Ansteuerungsschema für eine ferrroelektrische Flüssigkristallanzeige gezeigt, welche folgende Flüssigkristallmischung enthält,
19,2 Gew.% 2-(4-Heptoxyphenyl)-5-nonylpyrimidin
19,2 Gew.% 2-(4-Octoxyphenyl)-5-nonylpyrimidin
19,2 Gew.% 2-(4-Nonoxyphenyl)-5-nonylpyrimidin
6,4 Gew.% 2-(2,3-Difluor-4-heptoxyphenyl)-5-nonylpyrimidin
6,4 Gew.% 2-(2,3-Difluor-4-octoxyphenyl)-5-nonylpyrimidin
6,4 Gew.% 2-(2,3-Difluor-4-nonoxyphenyl)-5-nonylpyrimidin
19,2 Gew.% 2-(4-Hexoxypheny)-5-hexoxypyrimidin
4,0 Gew.% 4-(cis-4-Cyano-trans-4-heptylcyclohexyl)-4'-(2-fluor-octoxy)-biphenyl,
die durch die folgenden Parameter gekennzeichnet ist:
- Phasenfolge: K < -10 S_{C}* 65 S_{A} 70 Ch 75 I
(die zwischen zwei Phasenbezeichnungen stehenden Zahlen repräsentieren die jeweiligen Umwandelungstemperaturen)
- Spontanpolarisation: P_{S} (20 °C) = - 9 nCcm⁻²
- molekularer Tilt: ϑ (20 °C) = 23,5 °
- cholesterischer Pitch: p (72 °C) > 40 µm
- dielektrische Anisotropie: (20 °C, 20 kHz) = -0,9
- Schaltzeit: (20 °C, 15 V/µm) = 90 µs

Die bei diesen Messungen verwendete Zelle hat eine Schichtdicke von 1,5 µm.

In Fig. 1 b das an den Bildpunkten anliegende, zusammengesetzte Spannungssignal gezeigt, während in Fig. 1 a die mit einer Photodiode gemessene Transmission der ferroelektrischen Flüssigkristallzelle wiedergegeben ist. Das an den Bildpunkten anliegende Signal basiert auf dem herkömmlichen, AC-Feld stabilisierten GEC-2-Slot-Ansteuerschema ( WO 89/01680 und WO 89/01681), dem kurze Spannungspulse überlagert sind. Man ersieht aus Fig. 1, daß durch die Schreibimpulse des herkömmlichen Schemas (Pulsbreite = 30 µs, Select-Puls Vₛ = 36V, Datapuls V_{d} = 7 V, Blankpuls V = 50 V) eine große Transmissionsänderung bewirkt wird, die offensichtlich dem Umschalten zwischen den beiden oben beschriebenen ausgezeichneten Orientierungen entspricht. Demgegenüber zeigt sich jedoch, daß durch die wesentlich kürzeren überlagerten Pulse (Pulsbreite = 2 µs, Select-Puls Vₛ = 36 V, Datapuls V_{d} = 7 V, Blankpuls V_{b} = 50 V) kleinere stabile Transmissionsänderungen erfolgen, sodaß neben den durch die Hauptpulse erreichbaren voll durchgeschalteten Zuständen mit maximalen und minimalen Transmissionwerten (bei der oben beschriebenen Polarisatorkonfiguration, die bei diesem und den folgenden Beispielen verwendet wurde) weitere Zustände mit mittleren Transmissionswerten eingestellt werden können. In Fig. 1 werden durch die überlagerten kurzen Pulse 16 stabile Zwischenzustände erzeugt.

Die Existenz derartiger stabiler Zwischenzustände, die eine einfache Darstellung von Graustufen ermöglicht, ist völlig überraschend und wird in dem bisherigen theoretischen Konzept ferroelektrischer Flüssigkristallanzeigen nicht diskutiert. Bisher wurden ferroelektrische Flüssigkristalldisplays als bistabile Anzeigen charakterisiert, während sie durch das erfindungsgemäße Ansteuerungsverfahren zu multistabilen und damit zur Anzeige von Graustufen befähigten Displays werden.

In Fig. 2 ist ein weiteres erfindungsgemäßes Ansteuerungsschema für eine ferroelektrische Flüssigkristallanzeige gezeigt, die den oben angegebenen Flüssigkristall enthält. Das erfindungsgemäße Ansteuerungsschema basiert auf einem herkömmlichen Bari-4:3:1-Schema (P. Maltese et al., 1988 Intern. Display Research Conference, "Fast Adressing Modes for Ferroelectric LC Display .Panels"), dem sehr viel kürzere Pulse überlagert sind. In Fig. 2 b ist das an den Bildpunkten anliegende zusammengesetzte Signal zwischen 2 herkömmlichen breiten Hauptpulsen wiedergegeben (Pulsbreite = 5,4 µs, Select-Puls Vₛ = 36 V, Datapuls V_{d} = 7 V, Blankpuls V_{b} = 50 V), wobei die Hauptpulse nicht gezeigt sind. Zur Erzeugung der Zwischenzustände werden sehr schmale Pulse mit einer Pulsbreite von 540 ns benutzt ( Select-Puls Vₛ = 36 V, Datapuls V_{d} = 7 V, Blankpuls V_{b} = 50 V). Wie man aus Fig. 2 a entnimmt, wo die mit einer Photodiode gemessene Transmission gezeigt ist, werden sehr stabile Transmissionszwischenzustände erreicht, wobei je nach Polarität des kurzen Spannungsimpulses eine Verringerung oder eine Erhöhung der Transmission möglich ist.

Wie eingangs erwähnt, werden die Schreibimpulse üblicherweise durch das Produkt v x t gekennzeichnet. Da dieses Produkt jedoch von dem verwendeten Flüssigkristall und der jeweiligen Elektrodengeometrie abhängt, ist die Angabe absoluter Werte unzweckmäßig. In umfangreichen experimentellen Untersuchungen hat sich jedoch herausgestellt, daß der überlagerte Schreibzwischenimpuls zur Änderung des Ausrichtungszustandes in einen benachbarten Zwischenzustand maximal etwa 1/5 des Hauptschreibimpulses betragen sollte, der zum Umschalten zwischen den beiden voll durchgeschalteten Zuständen mit maximaler und minimaler Transmission erforderlich ist. Durch Variation des Spannungsimpulswertes der überlagerten Zwischenimpulse kann der Transmissionsunterschied zwischen benachbarten Zwischenzuständen innerhalb gewisser Grenzen variiert werden. Der Spannungsimpulswert Vt der Zwischenpulse darf jedoch nicht zu groß gemacht werden, da dann einerseits keine Zwischenzustände mehr erzeugt werden können und andererseits auch noch kein Umschalten zwischen den beiden voll durchgeschalteten Zuständen erfolgt. In den in Fig. 1 und Fig. 2 gezeigten Beispielen beträgt das Verhältnis der Vt-Werte von überlagertem Zwischenimpuls zu Hauptimpuls jeweils etwa 1/10. Das Verhältnis des Vt-Wertes der Zwischenimpulse zum Vt-Wert der Hauptimpulse ist vorzugsweise kleiner als 0,15 und insbesondere nicht größer als 0,10.

Die Breite des überlagerten Zwischenimpulses ist vorzugsweise nicht zu groß und insbesondere kleiner als 3 µs. Zwischen impulse mit einer Pulsbreite von nicht mehr als 2 µs und insbesondere von weniger als 1,5 µs sind dabei ganz besonders bevorzugt.

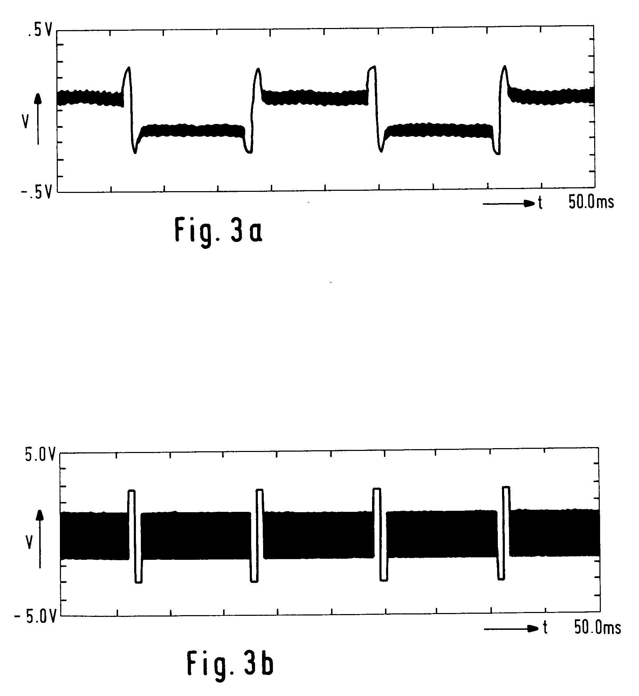

Ebenso wie es für die Vt-Werte der überlagerten Zwischen impulse eine obere Grenze gibt, oberhalb derer einerseits keine Zwischenzustände erzeugt werden und andererseits noch nicht zwischen den voll durchgeschalteten Zuständen geschaltet wird, existiert auch eine untere Grenze für die Erzeugung dieser Zustände. Dies ergibt sich bereits aus Fig. 1, wo durch die Überlagerung eines hochfrequenten AC-Feldes (V_{AC} = 15 V, Frequenz = 25 kHz) kein Umschalten zwischen benachbarten, stabilen Zwischenzuständen, sondern lediglich eine zusätzliche Stabilisierung der jeweiligen Zwischenzustände und damit insgesamt betrachtet eine Kontrastverbesserung erzielt wird. Dies geht auch noch einmal aus Fig. 3 hervor, wo ein ferroelektrisches Flüssigkristalldisplay, welches mit dem oben angegebenen ferroelektrischen Flüssigkristall befüllt ist, durch ein konventionelles AC-Feld stabilisiertes Seiko-Schema (s.o. loc.cit.) angesteuert ist (Pulsbreite = 5,4 µs, Vₛ = 30 V, V_{b} = 30 V, V_{d} = 15 V; V_{AC} = 15 V, Frequenz_{AC} = 25 kHz); das an den Bildpunkten anliegende, zusammengesetzte Spannungssignal ist in Fig. 3 b gezeigt. Man entnimmt Fig. 3 a, wo die mit einer Photodiode gemessene Transmission gezeigt ist, daß durch die AC-Stabilisierung lediglich die beiden unter den vorliegenden Bedingungen zugänglichen, voll durchgeschalteten Zustände stabilisiert werden, während keine stabilen Zwischenzustände erzeugt werden.

Da die jeweiligen Parameter des stabilisierenden AC-Feldes von dem verwendeten Flüssigkristall und Displayparametern abhängen, ist die Angabe einer quantitativen Untergrenze für das Vt-Produkt der Zwischenimpulse wiederum nicht zweckmämig. Das Verhältnis der Vt-Werte der Zwischenimpulse und der stabilisierenden AC-Pulse sollte jedoch nicht kleiner als etwa 2,0 und insbesondere größer als 2,5 und ganz besonders größer als 3 gewählt werden.

Das erfindungsgemäße Konzept, wonach mit relativ kurzen Impulse mit relativ kleinem Vt-Wert Zwischenzustände mit mittlerer Transmission erzeugt werden, kann problemlos mit konventionellen Ansteuerschemata kombiniert werden oder auch zur Entwicklung neuer Ansteuerschemata benutzt werden.

Das erfindungsgemäße Ansteuerungsverfahren erlaubt eine einfache und sehr effektive Einstellung von Grauwerten, wobei die bei herkömmlichen, zur Erzeugung von Grauwerten befähigten Ansteuerschemata auftretenden Nachteile nicht oder nur in sehr viel geringerem Ausmaß beobachtet werden. Dem erfindungsgemäßen Verfahren kommt damit eine erhebliche wirtschaftliche Bedeutung zu.

### Bildunterschriften

Fig. 1: Erfindungsgemäßes Ansteuerschema (modifiziertes GEC-2-Slot-Schema)
   a) Transmission = f (Zeit t)
      - Ordinate:: 0,1 V/Teilstrich
      - Abszisse:: 0,2 ms/Teilstrich
   b) Zusammengesetzte Spannung an den Bildpunkten = f (Zeit t)
      - Ordinate:: 10,0 V/Teilstrich
      - Abszisse:: 0,2 ms/Teilstrich

      - Hauptpulse:: Pulsbreite τ = 30 ns
      V_{b} = 50 V
      Vₛ = 36 V
      V_{d} = 7 V
      - Zwischenpulse:: Pulsbreite τ = 2 ns
      V_{b} = 50 V
      Vₛ = 36 V
      V_{d} = 7 V
Fig. 2: Erfindungsgemäßes Ansteuerschema (modifiziertes Bari 4:3:1-Schema)
   a) Transmission = f (Zeit t)
      - Ordinate:: 10,0 mV/Teilstrich
      - Abszisse:: 50 µs/Teilstrich
   b) Zusammengesetzte Spannung an den Bildpunkten = f (Zeit t)
      - Ordinate:: 20,0 V/Teilstrich
      - Abszisse:: 50 µs/Teilstrich

      - Hauptpulse (nicht gezeigt) :: Pulsbreite = 5,4 µs
      V_{b} = 50 V
      Vₛ = 36 V
      V_{d} = 7 V
      - Zwischenpulse:: Pulsbreite = 540 ns
      V_{b} = 50 V
      Vₛ = 36 V
      V_{d} = 7 V
      Mux 1:30
Fig. 3: Herkömmliches Seiko-Schema
   a) Transmission = f (Zeit t)
      - Ordinate:: 0,1 V/Teilstrich
      - Abszisse:: 5,0 ms/Teilstrich
   b) Zusammengesetzte Spannung an den Bildpunkte = f (Zeit t)
      - Ordinate:: 1,0 V/Teilstrich
      - Abszisse:: 5,0 ms/Teilstrich
      - Pulse:: Pulsbreite = 5,4 µs
      V_{b} = 30 V
      Vₛ = 30 V
      V_{d} = 15 V

## Patentansprüche

1. Verfahren zur Ansteuerung einer ferroelektrischen Flüssigkristallanzeige mit einem oder mehreren Bildpunkten, von denen jeder ein Paar von einander gegenüberliegenden Elektroden und einen zwischen den Elektroden angeordneten ferroelektrischen Flüssigkristall aufweist, der seinen Molekülausrichtungszustand in einen anderen Zustand ändert, wenn ein Schreibimpuls an die gegenüberliegenden Elektroden angelegt wird, der gleich oder größer als ein Schwellenimpuls V x t ist, worin V die zwischen den Elektroden liegende Spannung und t die Impulsdauer bedeuten und wobei der neue Zustand nach dem Ausschalten des Schreibimpulses bis zum Eintreffen eines weiteren Schaltimpulses erhalten bleibt, dadurch gekennzeichnet, daß durch die Schreibimpulse neben den durch die beiden Tiltwinkel +ϑ und -ϑ gekennzeichneten voll durchgeschalteten Zuständen auch ein oder mehrere stabile Zwischenzustände erzeugt werden können, wobei der Vt-Wert des Schreibimpulses zur Erzeugung eines benachbarten Zwischenzustandes nicht mehr als etwa 1/5 des Vt-Wertes des Schreibimpulses beträgt, der zum Umschalten zwischen den beiden klassischen Zuständen erforderlich ist.

2. Verfahren nach Anspruch 1, dadurch gekennzeichnet, daß der Vt-Wert des Schreibimpulses zur Erzeugung eines benachbarten Zwischenzustandes nicht kleiner ist als etwa das 2-fache des Vt-Wertes von AC-Stabilisierungs-impulsen.

3. Verfahren nach einem der Ansprüche 1 oder 2, dadurch gekennzeichnet, daß die Impulsdauer des zur Erzeugung eines benachbarten Zwischenzustandes erforderlichen Schreibpulses nicht mehr als 3 µs beträgt.

4. Verfahren nach den Ansprüchen 1-3, dadurch gekennzeichnet, daß die Linearpolarisatoren der ferroelektrischen Flüssigkristallanzeige so orientiert sind, daß die klassischen Zustände durch eine maximale bzw. minimale Transmission gekennzeichnet sind, während die Zwischenzustände eine mittlere Transmission aufweisen und zur Darstellung von Graustufen dienen.

5. Verfahren nach einem der Ansprüche 1-4, dadurch gekennzeichnet, daß als ferroelektrischer Flüssigkristall ein chiraler smektischer Flüssigkristall in C- oder H-Phase mit unterdrückter Helixstruktur verwendet wird.

6. Verfahren nach einem der Ansprüche 1-5, dadurch gekennzeichnet, daß die ferroelektrische Anordnung eine Vielzahl von Bildpunkten aufweist, die in einer Vielzahl von Zeilen und Spalten angeordnet sind, und daß die Schreibimpulse zeilenweise aufeinanderfolgend angelegt werden.

7. Verfahren nach einem der Ansprüche 1-6, dadurch gekennzeichnet, daß die verschiedenen Zustände des ferroelektrischen Flüssigkristalls dadurch charakterisiert sind, daß dem Zeilensignal ein hochfrequentes Wechselfeld überlagert ist.
